# EUROPEAN PATENT SPECIFICATION

(11) **EP 1 196 893 B1**
(45) Date of publication and mention of the grant of the patent: **10.09.2003**
(21) Application number: 00943803.7
(22) Date of filing: 13.06.2000
(51) Int. Cl.: G06T 11/00, A45D 44/00

(54) **COLOUR COSMETIC SELECTION SYSTEM**
SYSTEM ZUR AUSWAHL VON FARBIGEN KOSMETIKA
SYSTEME DE SELECTION DE COSMETIQUE DE COULEUR

(30) Priority: 07.07.1999 US 142602 P
(43) Date of publication of application: 17.04.2002
(73) Proprietor: FD MANAGEMENT, INC., Wilmington, Delaware 19801 (US)
(72) Inventor: FLYNN, Madeline Demayo, Elizabeth Arden Co., Trumbull, CT 06611 (US)
(74) Representative: Gervasi, Gemma, Dr.
(86) International application number: EP0005459
(87) International publication number: WO01004840

(56) References cited:
- EP-A- 0 226 959
- EP-A- 1 030 267
- WO-A-97/29441
- WO-A-99/23609
- DE-A- 3 419 568
- US-A- 4 539 585
- US-A- 5 478 238
- US-A- 5 495 338

## Description

### Field of the Invention

The present invention relates to a system for allowing a customer to select a colour palette of facial cosmetics and viewing their visual effect prior to actual application to the customer's face.

### BACKGROUND OF THE INVENTION & PRIOR ART

Stay at home shopping has become quite popular. Indeed the twenty-first century will likely move a majority of purchasing from the store to the home. Virtual shopping on the Internet is already a lively phenomenon.

Some products are quite difficult to select without personal interaction with the actual product. Colour cosmetics are an excellent example. Consumers are faced with a palette of colour which requires personalization and selection. Lipstick must match with foundation. Eye shadow and lip and eyeliners must be in harmony with other colours painting the face. Until now, the only way a consumer could determine their preferred combination was through applying the actual cosmetic onto the face through trial and error.

Cosmetic customers have been aided by a number of companies in the industry that have sought to provide a means for selecting the customer's optimal colour shade. For example, Clinique and Clarion have installed computers at sales counters for use by the customer. Information on colour shade, oiliness and other properties of a customer's skin are punched into the computer which then determines the company's most closely matching product.

Custom blending is also offered by two major companies, Prescriptives (a division of Estee Lauder) and Visage (a division of Revlon). They begin a sale by manually evaluating a subject's skin colour. The salesperson is trained through the use of match cards to identify a user's matching skin foundation. Unfortunately manual systems suffer from poor reproducibility. Extensive training must also be invested in the salesperson.

U.S. Patent 5,622,692 (Rigg et al.) reports a system for customising a facial foundation product at point of sale to a customer. Three essential elements are present. They include a skin analyser for reading skin properties, a programmable device receiving the reading and correlating it with an optimal formula and a formulation machine for preparing the facial foundation product from various cosmetic chemical compositions. Technology described in this patent has commercially been embodied in Elizabeth Arden's Custom Colour system available for many years in major department stores. Arden's system has been a significant advance in the art.

EP-A-1 030 267 discloses a method which includes determining a requested face which is requested by the person who wants the photograph to be corrected or wants to be made up. An image of the face corrected or made up by executing image-processing is then created such as the contour combining of the original face image or the face of the person based on the requested face.

WO-A-97 29441 discloses a method for automating the commercial activity of an optical shop involves using an imaging apparatus which picks up the face of the customer. According to the customer's cosmetic preferences and the features of the image of the face, an operating program presents a showcase with suggestions of best fit eyewear products e.g spectacles and frames and colour contact lenses. From the suggested showcase, the customer is able to try on and compare eyewear products on the image of the face. Once an eyewear product is chosen, the purchase order may be confirmed, and a computer unit, connected to an assembling machine through a communications program, provides immediate assembling and delivery of the chosen eyewear products.

However, it suffers from certain deficiencies including the inability of customers to evaluate different colour cosmetics in the context of their own skin coloration and in juxtaposition to combinations of different facial makeover products. Thus, it would be desirable to have visualised a lipstick and a foundation, eye shadow and/or blush on a colour interactive basis. Especially desirable would be to evaluate the interaction of the various colour cosmetics without actually having to place these on one's own face.

Another problem of the practiced art has been the inability of a customer to render an informed buying decision far from the store. It is true that the Internet has allowed home purchasing of products with which the customer is well acquainted. However, where a product requires a more physical review, such as visualising colour cosmetics, these have not yet rendered themselves suitable for Internet purchase.

Accordingly, it is an advantage of the present invention to provide a system and apparatus for virtual makeover of a facial colour palette without the necessity of the customer actually having to try on each colour cosmetic prior to final selection.

Another advantage of the present invention is to provide a virtual facial colour makeover that can be done in the privacy of the home.

These and other advantages of the present invention will become more readily apparent from the following summary and detailed discussion.

### SUMMARY OF THE INVENTION

The present invention provides a virtual makeover method for furnishing a customer with colour cosmetics as defined in appended claim 1.

### BRIEF DESCRIPTION OF THE DRAWINGS

The various objects, features and advantages of the present invention will become more readily apparent from consideration of the following drawing in which:
Fig. 1 is a flow chart diagramming a program used in the system of the invention for selecting facial colour cosmetic schemes;
Fig. 2 shows Screen 2 of the program;
Fig. 3 shows Pop-Up Screen 3 of the program;
Fig. 4 shows Pop-Up Screen 4 of the program;
Fig. 5 shows Overlay 5 of the program;
Fig. 6 shows Screen 6 of the program;
Fig. 7 shows Overlay 7 of the program;
Fig. 8 shows Pop-Up Screen 8 of the program;
Fig. 9 shows Pop-Up Screen 9 of the program;
Fig. 10 shows Pop-Up Screen 10 of the program;
Fig. 11 shows Pop-Up Screen 11 of the program;
Fig. 12 shows Pop-Up Screen 12 of the program;
Fig. 13 shows Pop-Up Screen 13 of the program;
Fig. 14 shows Pop-Up Screen 14 of the program;
Fig. 15 shows Overlay Screen 15 of the program;
Fig. 16 shows Pop-Up Screen 16 through 19 of the program;
Fig. 17 shows Pop-Up Screen 20 of the program;
Fig. 18 shows Pop-Up Screen 21 of the program;
Fig. 19 shows Pop-Up Screen 22 of the program;
Fig. 20 shows Pop-Up Screen 23 of the program;
Fig. 21 shows Screen 24 of the program; and
Fig. 22 shows Overlay 25 of the program.

### DETAILED DESCRIPTION OF THE INVENTION

Now it has been found that virtual makeover can be accomplished on-line through an Internet web site. A visualising facial image is projected onto a monitor. The customer is then given the ability to paint various areas of the face representing locations normally to be covered by eye shadow, lipstick, foundation, eyeliner, mascara and the like. These different areas of the face can be painted with a variety of different colours from the cosmetic product palette until an optimum combination is reached satisfactory to a look which the customer desires. A final step of the method involves placement of an order with a vendor for cosmetic products with the chosen colour. No longer does a customer actually need to try the product on his or her own face. A very rapid and clean evaluation can occur through use of the visualised model face.

Measured true skin colour values are obtained by the customer visiting a point-of-sale location (e.g. store) where such measurements are taken by a vendor representative using a spectrophotometer and fed into the web site database for future use at the customer's home location.

Advantageously the facial image appearing on the web site is initially coloured with a shade representing the customer's actual measured shade. Colours for lips and eye areas can then be manipulated through the computer program and visualised on the facial image for selection of the most desired combination. Particularly preferred is display of a facial image corresponding exactly to that of the customer based on the earlier digitalized photographic input of the customer's face.

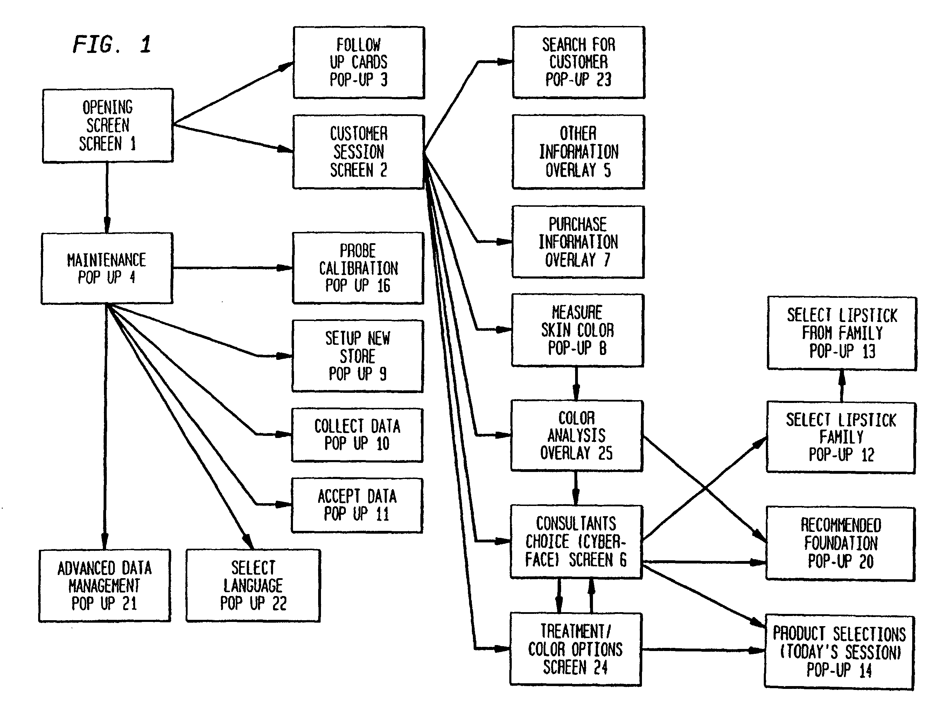

Fig. 1 is a flow chart of a program according to one embodiment of this invention. After the opening screen, a user is introduced to Screen 2 known as the 'customer session'. Client information is obtained via this screen through either a swipe card, entry via a keyboard or from a database. The screen remains active (buttons are available) when overlays are displayed. Fig. 1 provides a view of Screen 2.

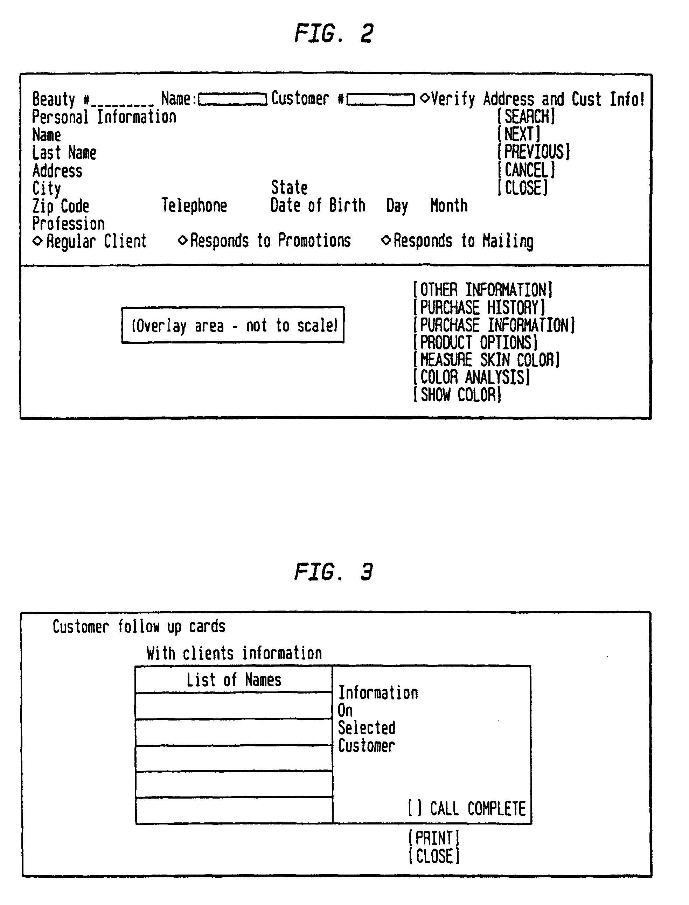

A Pop-up Screen 3 next appears with comments and client information to prompt follow-up calls. This screen can be used for contacting the client to remind them to visit the store when their cosmetic supply may be low. Fig. 3 illustrates the screen.

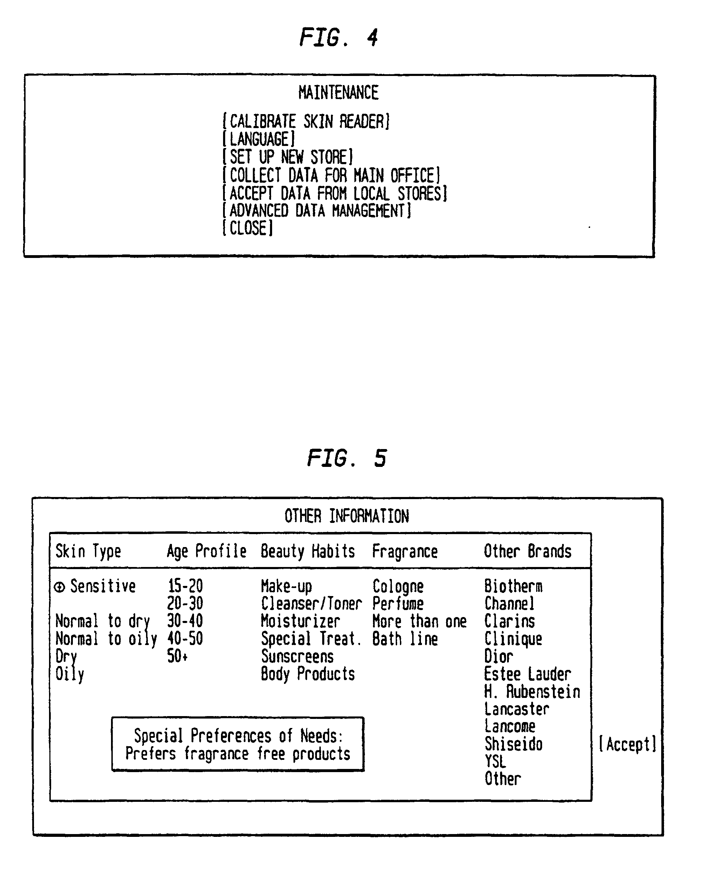

Pop-up Screen 4 covering 'Maintenance' is then available for appearance. This pop-up screen has options for calibration and data handling. Fig. 4 sets forth the screen.

Other information is collected with Overlay Screen 5. The Overlay screen selects/changes information about skin, beauty habits, type and brand of products used. Overlay Screens 2 and the buttons on Screen 2 remain active. Fig. 5 describes Overlay Screen 5.

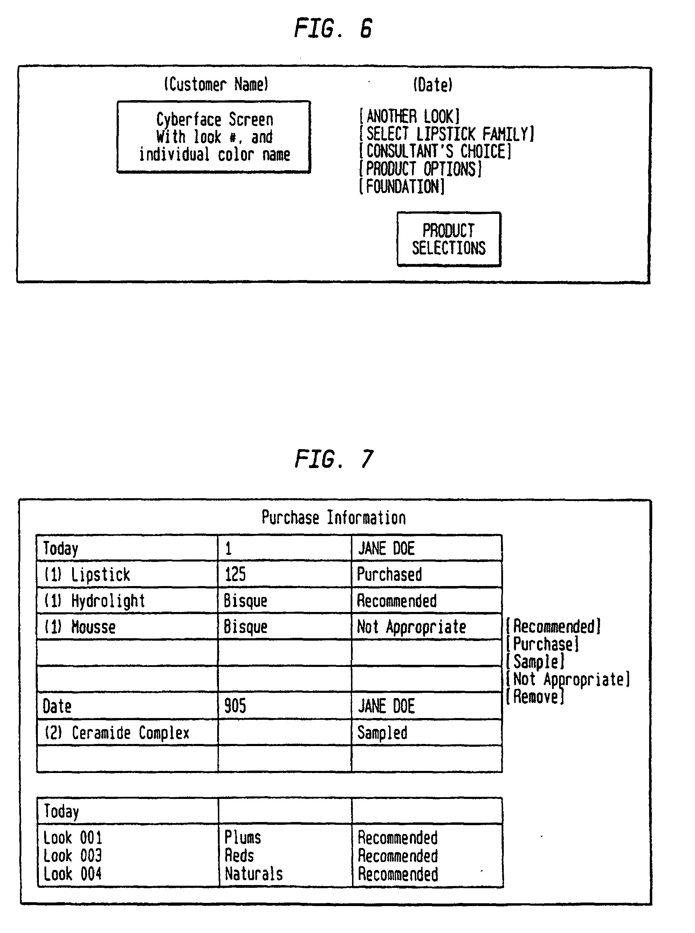

Screen 6 provides a 'Consultant's Choice'. This screen shows effects of colour palette, using client's skin colour. Information on the client's skin colour is obtained through application of a hand-held spectrophotometer against areas of the face not likely to be covered by makeup. These areas include the neck and under chin areas. The cosmetic 'look' can either be based on skin colour (skin recommendation), lipstick colour (colour family), or a specific look. Depending on selections, a list of typically five 'looks' is created, and selecting (another look) displays next look in the series. Fig. 6 sets forth Screen 6.

Purchase information is achieved in Overlay Screen 7. This screen with previous and current purchase information (overlay to screen 2) is ordered by visit date. It contains information from up to the last five visits. Purchase information includes number, product type, product name and product number. Fig. 7 sets forth the purchase information screen.

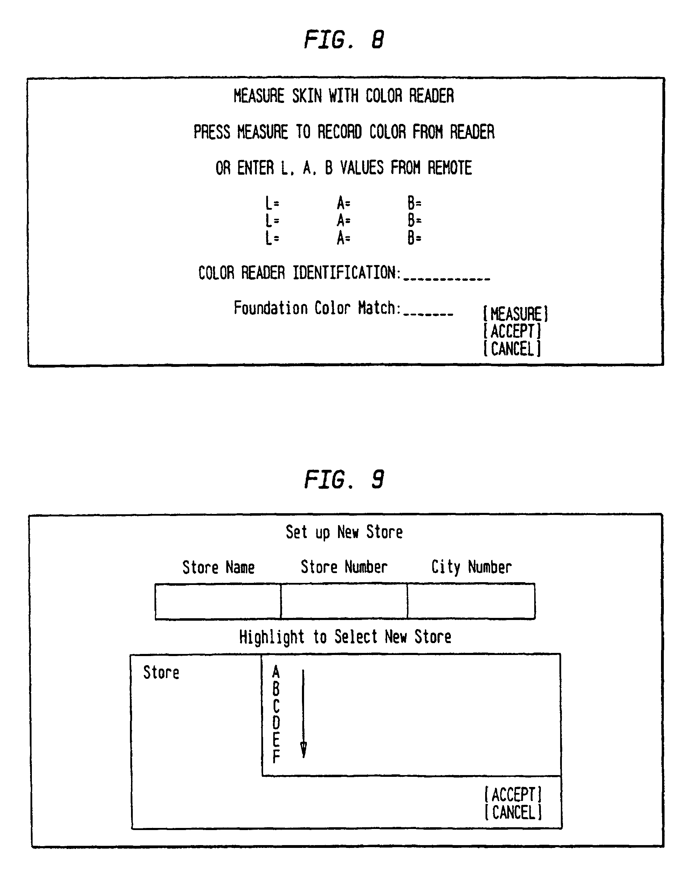

Pop-up Screen 8 measures skin colour. It consists of a series of screens to assist an adviser with colour measurement. This session is repeated three times. Fig. 8 depicts the Pop-up Screen 8.

Pop-up Screen 9 serves to obtain information for a new store. It is used by the installation team to correctly set up the store-specific parameters. Fig. 9 describes the Pop-up Screen 9.

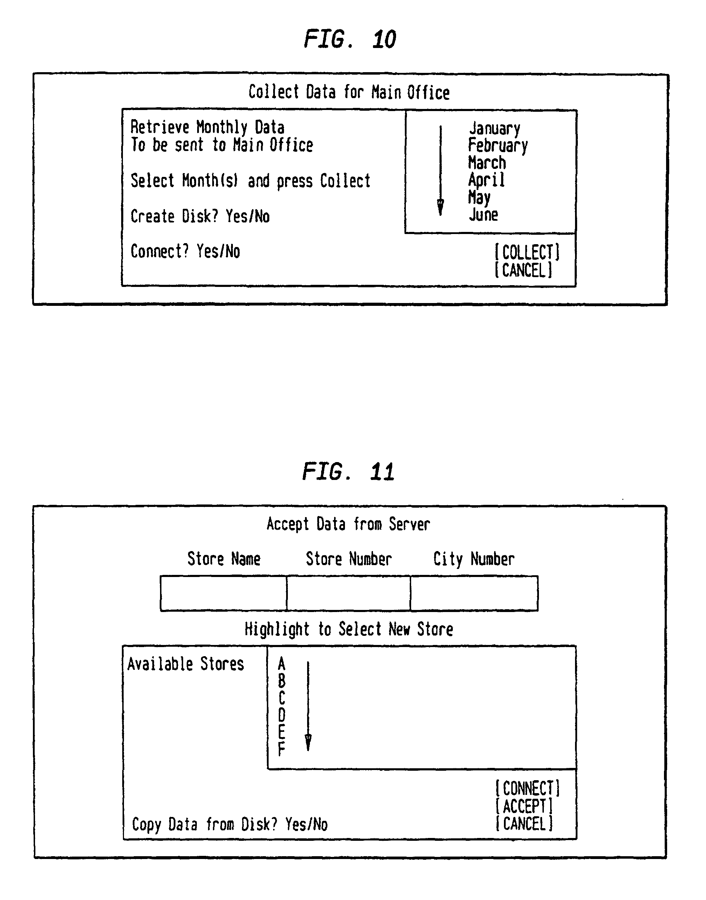

Collection of data for the main office is found in Pop-up Screen 10. Data is placed in a store's outbox, and can then be transferred in three ways. These include: (1) remote computer can dial in and retrieve file from outbox; (2) transfer information to a server automatically using PC-anywhere script; and/or (3) copied to floppy disk and mailed to central site. Fig. 10 illustrates the Pop-up Screen 10.

Pop-up Screen 11 copies data from other stores. It can accept data in two ways. These include: (1) update using floppy supply by the main office; or (2) use of PC/Anywhere script to retrieve update file from main office outbox. Fig. 11 illustrates the Pop-up Screen 11.

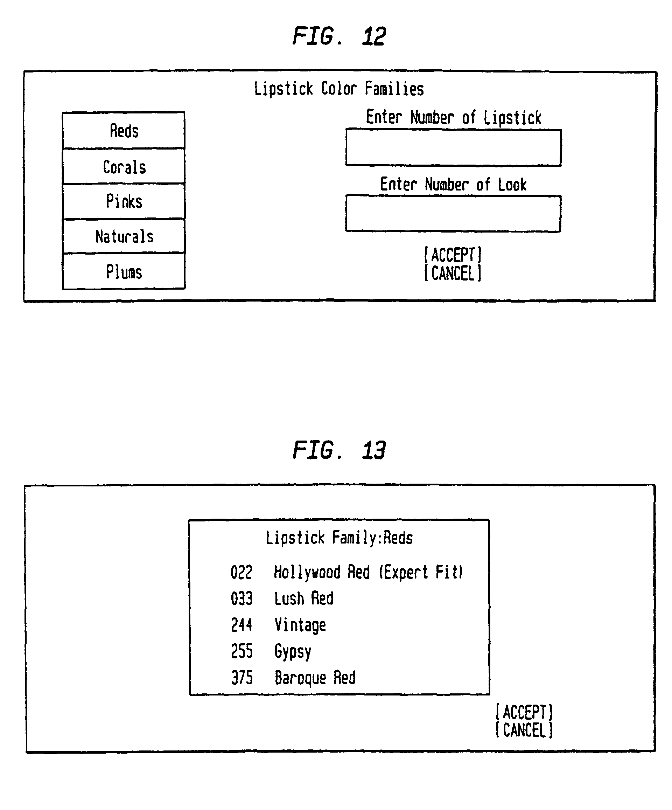

Pop-up Screen 12 allows selection of a colour lipstick family. The customer advisor can either enter a specific lipstick number, or choose a colour family, then choose a colour from the family. The active colour palette will consist of individual palettes that contain that lipstick. The advisor can also enter a specific look (which can be either from a previous visit, or any of the available looks in the palette). Fig. 12 describes the pop-up Screen 12.

Pop-up Screen 13 allows selection of lipstick from a colour family (as selected from Pop-up Screen 12). If the lipstick is also in the palette recommendation based on skin tone, the colour is put first in the list, and (expert fit) is added to the name. Fig. 13 describes the Pop-up Screen 13.

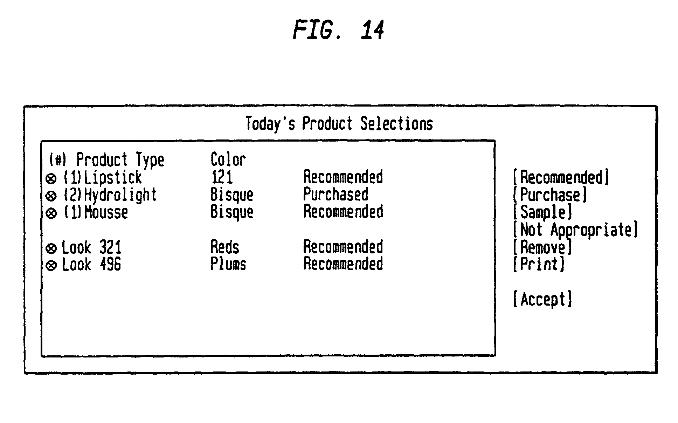

Pop-up 14 shows product selections (e.g. treatments in cosmetic colours) made during the present session. Product selections can be made during colour viewing (Screen 6), treatment/product options (Overlay 24) or Recommended Foundation (Pop-up Screen 20). There also is a display of recommended looks. Fig. 14 describes the Pop-up Screen 14.

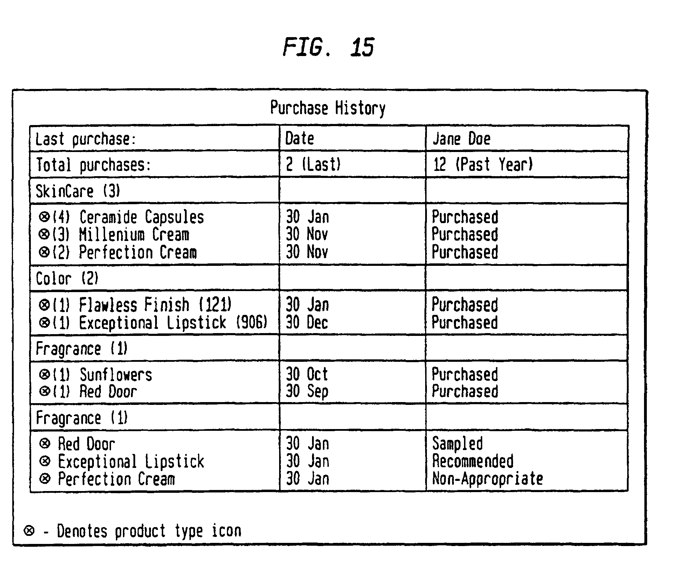

Overlay Screen 15 is used to provide a snapshot of the type of customer. For detail purchase history, Overlay 7 provides the purchase information. Included in this screen are key purchase properties, group by type, over the past twelve months. It is automatically displayed for each customer. Fig. 15 lists the Overlay Screen 15.

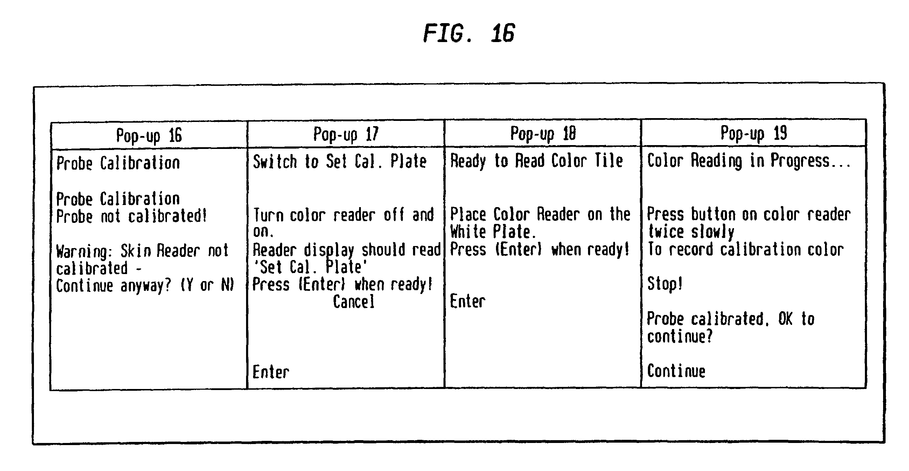

Pop-up Screen 16 is a probe for calibration/routine and for messages to calibrate probe. Fig. 16 details the Pop-up Screens 16-19.

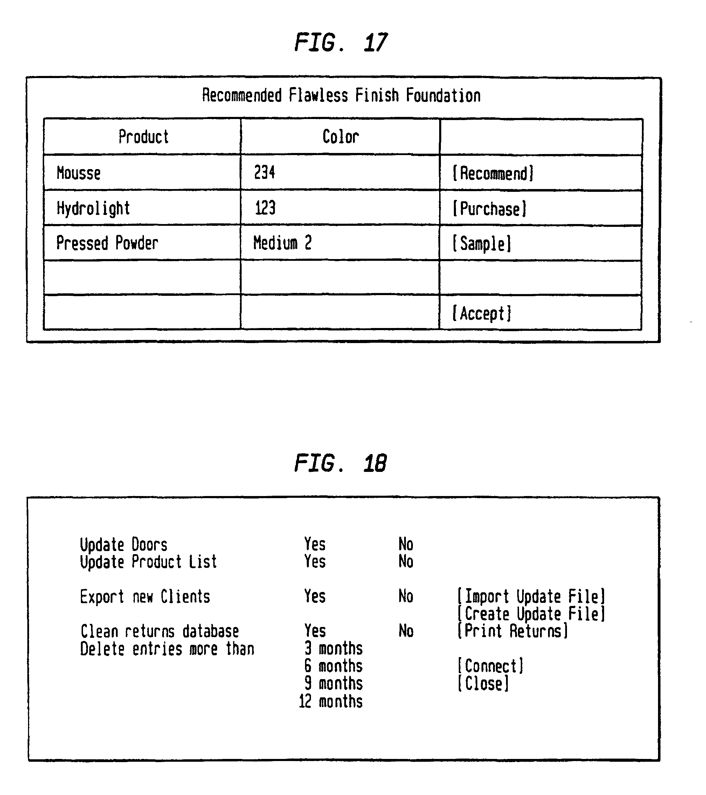

Pop-up Screen 20 is used to recommend the best foundation product combination based on skin colour and product preferences. Fig. 17 details the Pop-up Screen 20.

Pop-up Screen 21 is an advanced data management module. This is used by the main office. Fig. 18 details the Pop-up Screen 21.

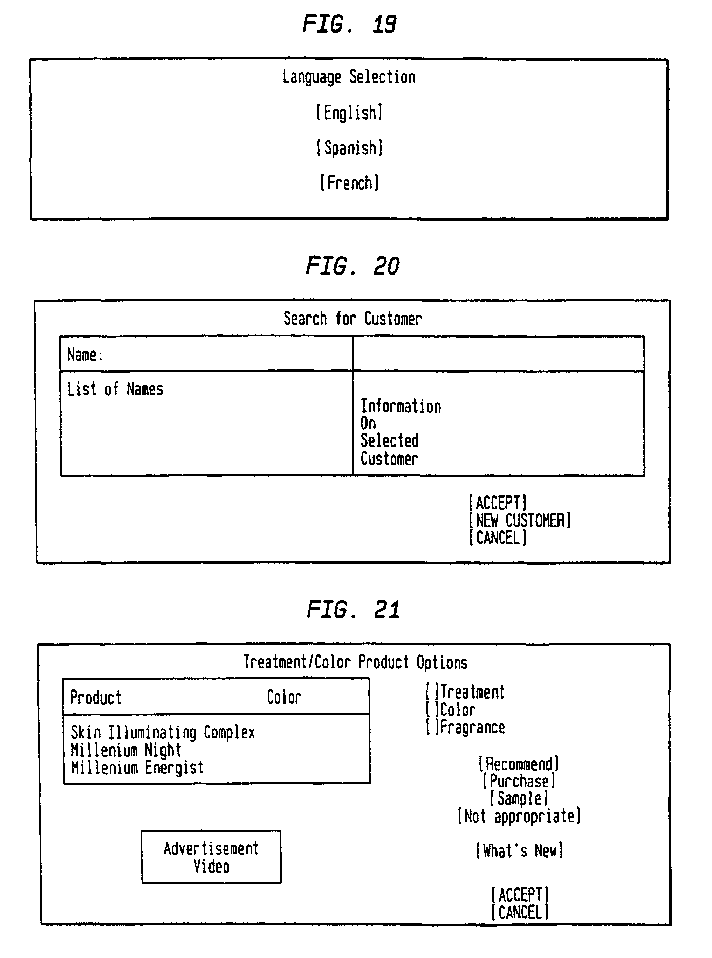

Pop-up Screen 22 relates to language selection. Fig. 19 details Pop-up Screen 22.

Pop-up Screen 23 is used to locate and activate a client. If this is a new client, the 'new' button is clicked to create the new client file. Fig. 20 details Pop-up Screen 23.

Screen 24 details treatment/colour/fragrance options showing all the option products. Fig. 21 details Screen 24.

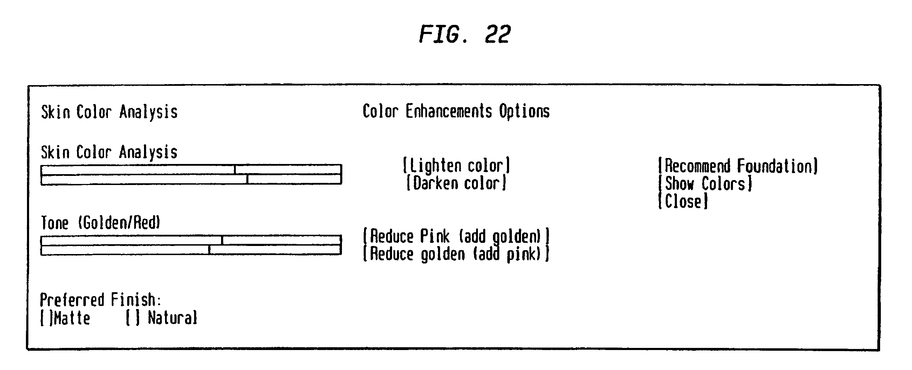

Overlay 25 focuses on skin colour analysis allowing selection of shade and tone. Fig. 22 details the Overlay 25.

The foregoing description illustrates selected embodiments of the present invention. In light thereof variations and modifications will be suggested to one skilled in the art, all of which are within the scope of this invention.

## Claims

1. A virtual makeover method for furnishing a customer with colour cosmetics, the method comprising the steps of:
(i) downloading from an Internet web site to a computer module a facial image;
(ii) obtaining information of a customer's facial colour with a spectrophotometer,
(iii) transmitting information of the measured facial colour to the computer module for display of that colour on the facial image generated on a colour monitor screen;
(iv) generating a colour selection recommendation based on the measured skin colour of the customer transmitted from the spectrophotometer;
(v) displaying the colour selection recommendation to the customer on a consultant's choice screen ;
(vi) allowing the selection of a colour cosmetic from eye shadow, lipstick, foundation, eyeliner, mascara, lip liner, blush and combinations thereof;
(vii) allowing the selection of a colour from a palette of colours for applying to a specified area of the facial image; and
(viii) allowing the placement of an order for the selected colour cometic with corresponding selected colour.

2. The method according to claim 1 wherein the customer's own natural skin colour is stored as digitalised information accessible by the internet web site, the digitalised information having been obtained through a measurement of the customer's actual skin.

## Patentansprüche

1. Verfahren für eine virtuelle Schönheitskur, um Farbkosmetika an einen Kunden zu liefern, wobei das Verfahren die folgenden Schritte umfasst:
(i) Herunterladen eines Gesichtsbildes von einer Intemet-Website auf ein Computermodul;
(ii) Erhalten von Informationen über die Gesichtsfarbe eines Kunden mit einem Spektralfotometer;
(iii) Übertragen von Informationen über die gemessene Gesichtsfarbe an das Computermodul, um diese Farbe auf dem Gesichtsbild anzuzeigen, das auf einem Farbmonitorbildschirm erzeugt wird;
(iv) Erzeugen einer Farbauswahlempfehlung anhand der gemessenen Hautfarbe des Kunden, die von dem Spektralfotometer übertragen worden ist;
(v) Anzeigen der Farbauswahlempfehlung an den Kunden auf einem Berater-Auswahlbildschirm;
(vi) Ermöglichen der Auswahl eines Farbkosmetikums unter einem Lidschatten, einem Lippenstift, einer Grundierungscreme, einem Eyeliner, einer Wimpemtusche, einem Lipliner, einem Rouge und Kombinationen davon;
(vii) Ermöglichen der Auswahl einer Farbe aus einer Palette von Farben zum Auftragen auf einen angegebenen Bereich des Gesichtsbildes; und
(viii) Ermöglichen des Aufgebens einer Bestellung für das ausgewählte Farbkosmetikum mit einer entsprechenden ausgewählten Farbe.

2. Verfahren nach Anspruch 1, bei dem die eigene natürliche Hautfarbe des Kunden als digitalisierte Informationen gespeichert wird, auf die die Intemet-Website zugreifen kann, wobei die digitalisierten Informationen durch eine Messung der tatsächlichen Haut des Kunden erhalten worden sind.

## Revendications

1. Procédé de métamorphose virtuelle pour fournir à un(e) client(e) des produits cosmétiques de couleur, le procédé comprenant les étapes consistant à :
(i) télécharger une image de visage sur un ordinateur à partir d'un site Internet ;
(ii) obtenir l'information concernant la couleur du visage d'un(e) client(e) à l'aide d'un spectrophotomètre ;
(iii) transmettre l'information de la couleur du visage mesurée à l'ordinateur pour l'affichage de cette couleur sur l'image du visage générée sur l'écran en couleur-;
(iv) générer une recommandation de sélection de couleur basée sur la couleur de la peau mesurée du (de la) client(e) transmise à partir du spectrophotomètre ;
(v) afficher la recommandation de sélection de couleur au (à la) client(e) sur un écran au choix du consultant ;
(vi) permettre la sélection d'un produit cosmétique de couleur parmi de une ombre à paupières, un rouge à lèvre, un fond de teint, un eyeliner, un mascara, un crayon à lèvre, un fard à joues et leurs combinaisons ;
(vii) permettre la sélection d'une couleur à partir d'une palette de couleurs pour l'appliquer sur une zone spécifiée de l'image du visage ; et
(viii) permettre l'envoi d'une commande concernant le produit cosmétique de couleur sélectionné avec la couleur sélectionnée correspondante.

2. Procédé selon la revendication 1 dans lequel la propre couleur naturelle de la peau du (de la) client(e) est stockée en tant qu'information numérisée accessible par le site Internet, l'information numérisée ayant été obtenue par une mesure de la véritable peau du (de la) client(e).
